# EUROPEAN PATENT SPECIFICATION

(11) **EP 2 506 668 B1**
(45) Date of publication and mention of the grant of the patent: **06.09.2017**
(21) Application number: 12160239.5
(22) Date of filing: 20.03.2012
(51) Int. Cl.: H05B 6/06, H05B 6/12

(54) **Control method of induction heating cooker**
Verfahren zur Steuerung eines Induktionsherds
Procédé de commande d'appareil de cuisson à chauffage par induction

(30) Priority: 28.03.2011 KR 20110027407; 05.08.2011 KR 20110078105
(43) Date of publication of application: 03.10.2012
(73) Proprietor: Samsung Electronics Co., Ltd., Suwon-si, Gyeonggi-do, 443-742 (KR)
(72) Inventor: Lee, Sung Ho, Gyeonggi-do (KR); Shon, Jong Chull, Gyeonggi-do (KR); Jung, Min Gyu, Gyeonggi-do (KR); Kim, Ha Na, Incheon (KR)
(74) Representative: Grünecker Patent- und Rechtsanwälte PartG mbB

(56) References cited:
- EP-A1- 1 951 003
- FR-A1- 2 863 039

## Description

### BACKGROUND

### 1. Field

Embodiments of the present invention relate to a control method of an induction heating cooker which may heat a container regardless of the position of the container on the cooking plate.

### 2. Description of the Related Art

An induction heating cooker is an apparatus which supplies high-frequency current to heating coils to generate a strong high-frequency magnetic field and generates eddy current on containers magnetically connected to the heating coils through the magnetic field to cook foods using Joule's heat due to the eddy current.

Such an induction heating cooker includes a main body forming the external appearance of the induction heating cooker, and a plurality of heating coils fixed to the inside of the main body to supply a heat source. Further, a cooking plate on which containers are placed is provided on the upper surface of the main body. Container lines are engraved on the cooking plate at positions corresponding to the heating coils, and serve to guide a position at which a container is to be located when a user desires to cook food.

However, if food is cooked using such a conventional induction heating cooker, the user needs to precisely place a container at the container line to effectively cook the food. That is, when the user places the container at a position deviating from the container line, the food is not effectively cooked.

In order to solve such a drawback, a new induction heating cooker in which a large number of heating coils are disposed below the overall surface of a cooking plate so that food is effectively cooked regardless of the position where the user places a container on the cooking plate has been developed.

If food is cooked using the new induction heating cooker, an operation (a container position detection operation) of detecting a position where the container is located needs to be executed prior to start of cooking after the user places the container on the cooking plate.

When the container position detection operation is carried out, a power level of the container is input by the user. When different power levels are input to adjacent heating coils, interference noise is generated due to a difference between operating frequencies of pulse width modulation signals applied to the respective heating coils.

Further, even when the same power level is input to the adjacent heating coils, interference noise may be generated by controlling operating frequencies of different pulse width modulation signals according to occupation areas of the respective heating coils. When the areas of the adjacent coils occupied by the containers are different, different output currents flowing along the coils are sensed, and in order to converge the output currents of the respective heating coils into a target current range corresponding to the input power level, pulse width modulation signals of different duty ratios need to be applied.

FR 2 863 039 A1 discloses a method for heating a container placed on a cook top of an induction heating cooker. Sub-control processors are controlled by a master processor wherein power variation is obtained by pulse width modulation of the oscillatory signal at a fixed working frequency.

EP 1 951 003 A1 discloses a method for controlling the power delivery to a pair of induction heaters belonging to a household cooking hob. The method comprises a simultaneous activation of both the induction heaters at the same frequency as during the first fraction of the control period and the activation of only one induction heater at a second frequency for a second fraction of the control period.

### SUMMARY

Therefore, it is an aspect to provide a control method of an induction heating cooker which, when the same power level is input to plural adjacent heating coils, equally changes operating frequencies of applied pulse width modulation signals regardless of occupation areas of the heating coils.

It is another aspect to provide a control method of an induction heating cooker which, when different power levels are input to plural adjacent heating coils, applies a pulse width modulation signal corresponding to a maximum power level from among the different power levels to the plural heating coils, and executes time division control of at least one heating coil except for the heating coil to which the maximum power level is applied.

Additional aspects will be set forth in part in the description which follows and, in part, will be apparent from the description, or may be learned by practice of the invention.

In accordance with one aspect, a control method of an induction heating cooker, which includes a cooking plate, a plurality of heating coils to heat containers placed on the cooking plate, a plurality of inverter units to respectively supply high-frequency power to the plurality of heating coils, and sensing units to respectively sense currents flowing along the plurality of heating coils according to the high-frequency power supplied by the plurality of inverter units, includes detecting at least one heating coil occupied by a first container from among the plurality of heating coils, switching the plurality of inverter units so that a power level input by a user is applied to the detected at least one heating coil, determining, if the at least one heating coil occupied by the first container includes plural heating coils, whether or not output currents within a target output current range corresponding to the power level are present from among the output currents of the respective heating coils sensed by the sensing units, and equally adjusting duty ratios of pulse width modulation signals applied to the inverter units of the respective heating coils until at least one of the output currents reaches the target output current range, if no output current within the target output current range is present.

The duty ratios of the pulse width modulation signals may be changed until the maximum output current from among the output currents of the heating coils reaches the target output current range.

The control method may further include detecting at least one heating coil occupied by a second container, if the second container is additionally placed on the cooking plate adjacent to the first container during cooking of the first container, and judging whether or not power levels of the first container and the second containers are equal by confirming the power level of the second container input through a user interface unit.

The control method may further include applying a pulse width modulation signal having an equal duty ratio to the respective heating coils and intermittently applying the pulse width modulation signal to at least one of the heating coils, upon judging that the power levels of the first container and the second container are different.

The control method may further include judging the maximum power level from among the power levels of the first container and the second container, applying a pulse width modulation signal having a duty ratio corresponding to the maximum power level to the respective heating coils, and turning at least one heating coil, except for the heating coils having the maximum power level, on/off and applying the pulse width modulation signal to the at least one heating coil only during an ON section to intermittently operate the at least one heating coil.

The intermittent operation of the at least one heating coil may include setting a ratio of the ON section to an OFF section of the at least one heating coil in proportion to a ratio of the power level of the corresponding heating coil to the maximum power level.

The intermittent operation of the at least one heating coil may include turning the heating coils having the maximum power level off and then turning the heating coils having the maximum power level on simultaneously with turning-on of the at least one intermittently operated heating coil when the at least one intermittently operated heating coil is switched from the OFF section to the ON section.

The detection of the at least one heating coil occupied by the first container may include controlling operation of the plurality of inverter units so that the high-frequency power is alternately supplied to the plurality of heating coils, and judging that the corresponding heating coil is occupied by the first container, if a current value sensed through the corresponding sensing unit is more than a predetermined current value as a result of the operation of the plurality of inverter units.

The detection of the at least one heating coil occupied by the second container may include controlling operation of the plurality of inverter units so that the high-frequency power is alternately supplied to the remaining heating coils except for the at least one heating coil occupied by the first container during cooking of the first container, and judging that the corresponding heating coil is occupied by the second container, if a current value sensed through the corresponding sensing unit is more than the predetermined current value as a result of the supply of the high-frequency power to the remaining heating coils.

The control method may further include, if the output current of at least one of the at least one heating coil occupied by the first container is increased after the second container is placed on the cooking plate, judging the heating coil having the increased output current to be occupied in common by the first container and the second container.

In accordance with another aspect, a control method of an induction heating cooker, which includes a cooking plate, a plurality of heating coils to heat containers placed on the cooking plate, a plurality of inverter units to respectively supply high-frequency power to the plurality of heating coils, and sensing units to respectively sense currents flowing along the plurality of heating coils according to the high-frequency power supplied by the plurality of inverter units, includes detecting plural heating coils occupied by plural containers from among the plurality of heating coils, judging whether or not power levels of the detected heating coils input by a user are equal, equally adjusting duty ratios of pulse width modulation signals applied to the inverter units of the respective heating coils until at least one of output currents sensed by the sensing units of the detected heating coils reaches a target output current range corresponding to the power level, upon judging that power levels of the detected heating coils input by a user are equal, and applying a pulse width modulation signal having an equal duty ratio to the detected heating coils and intermittently applying the pulse width modulation signal to at least one of the heating coils, upon judging that the power levels are different.

The induction heating cooker may further include a user interface unit to display the number and position information of the containers placed on the heating coils and to input the number and sizes of the containers if the displayed number of the containers does not coincide with the number of the containers placed on the heating coils.

The duty ratios of the pulse width modulation signals may be changed until the maximum output current from among the output currents of the heating coils reaches the target output current range.

The control method may further include judging the maximum power level from among the power levels, upon judging that the power levels are different, applying a pulse width modulation signal having a duty ratio corresponding to the maximum power level to the respective heating coils, and periodically turning at least one heating coil, except for the heating coils having the maximum power level, on/off and applying the pulse width modulation signal to the at least one heating coil only during an ON section to intermittently operate the at least one heating coil.

The intermittent operation of the at least one heating coil may include setting a ratio of the ON section to an OFF section of the at least one heating coil in proportion to a ratio of the power level of the corresponding heating coil to the maximum power level.

The intermittent operation of the at least one heating coil may include turning the heating coils having the maximum power level off and then turning the heating coils having the maximum power level on simultaneously with turning-on of the at least one intermittently operated heating coil when the at least one intermittently operated heating coil is switched from the OFF section to the ON section.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view illustrating the configuration of an induction heating cooker in accordance with one embodiment of the present invention;
FIG. 2 is a control block diagram of the induction heating cooker in accordance with the embodiment of the present invention;
FIG. 3 is a detailed view of one example of a user interface unit shown in FIG. 1;
FIG. 4 is a detailed view of another example of the user interface unit shown in FIG. 1;
FIG. 5 is a view illustrating one example of placement of one container on the induction heating cooker in accordance with the embodiment of the present invention;
FIG. 6 is a flowchart illustrating a control method of an induction heating cooker in accordance with one embodiment of the present invention;
FIG. 7 is a view illustrating a result of a container position detection operation displayed on the user interface unit of the induction heating cooker in accordance with the embodiment of the present invention;
FIGS. 8(a) and 8(b) are graphs illustrating pulse width modulation signals applied to respective heating coils occupied by a container and output currents detected as a result of application of the pulse width modulation signals;
FIGS. 9(a) and 9(b) are graphs illustrating pulse width modulation signals adjusted to control output of target output current while preventing interference noise and output currents at this time;
FIG. 10A is a view illustrating one example of placement of plural containers on the induction heating cooker in accordance with the embodiment of the present invention;
FIG. 10B is a view illustrating another example of placement of plural containers on the induction heating cooker in accordance with the embodiment of the present invention;
FIG. 11 is a flowchart illustrating a control method of an induction heating cooker in accordance with another embodiment of the present invention;
FIG. 12 is a graph illustrating operation timing of heating coils occupied by respective containers;
FIG. 13 is a flowchart illustrating a control method of an induction heating cooker in accordance with another embodiment of the present invention;
FIG. 14A is a view illustrating a result of a container position detection operation displayed on the user interface unit of the induction heating cooker in accordance with the embodiment of the present invention;
FIG. 14B is a view illustrating input of the number of containers through the user interface unit of the induction heating cooker in accordance with the embodiment of the present invention;
FIG. 14C is a view illustrating input of the sizes of containers through the user interface unit of the induction heating cooker in accordance with the embodiment of the present invention; and
FIG. 14D is a view illustrating input of the sizes of containers through the user interface unit of the induction heating cooker in accordance with the embodiment of the present invention.

### DETAILED DESCRIPTION

Reference will now be made in detail to the embodiments of the present invention, examples of which are illustrated in the accompanying drawings, wherein like reference numerals refer to like elements throughout.

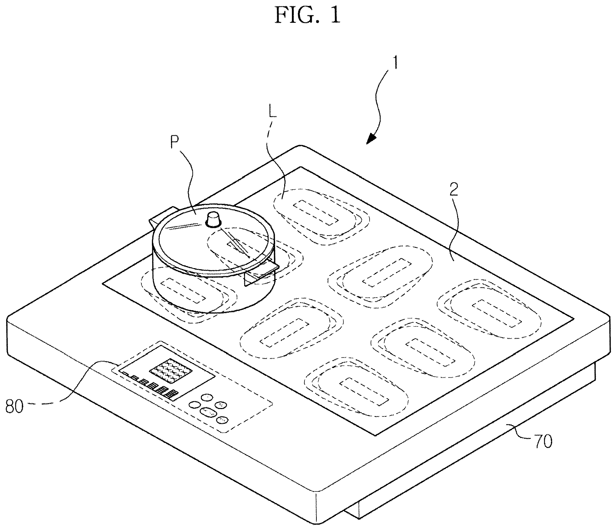

FIG. 1 is a perspective view illustrating the configuration of an induction heating cooker in accordance with one embodiment of the present invention.

A cooking plate 2 on which containers P are placed is installed on the upper surface of a main body 1.

A plurality of heating coils L installed below the cooking plate 2 to supply heat to the cooking plate 2 is provided within the main body 1. The heating coils L are densely disposed at a designated interval below the overall surface of the cooking plate 2. The embodiment of the present invention exemplarily describes disposition of 8 heating coils L.

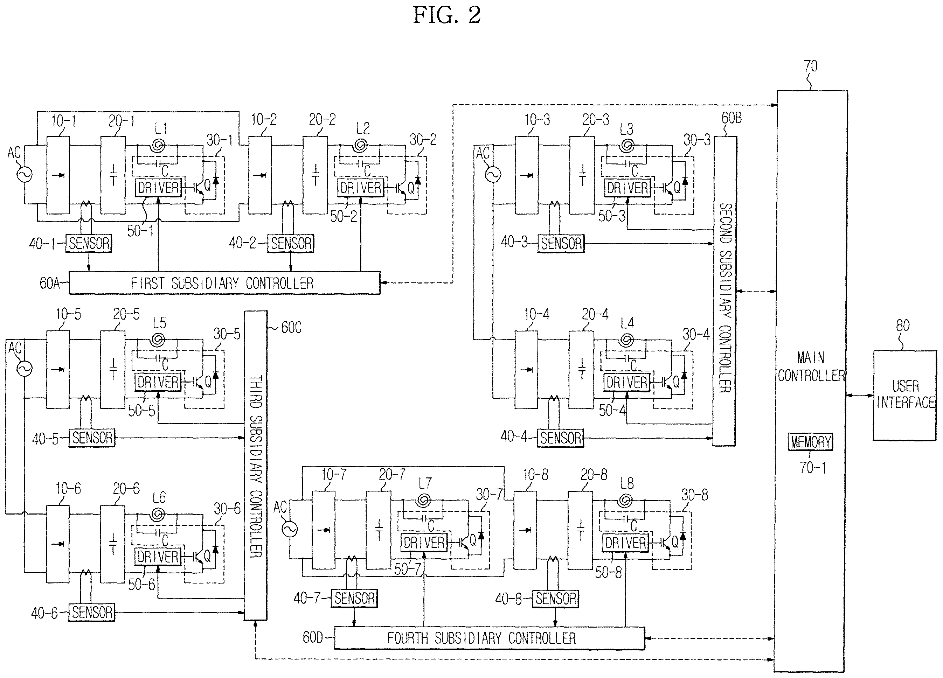

A control unit 70 to drive the heating coils L is provided below the cooking plate 2. A circuit configuration of the control unit 70 will be described in more detail later with reference to FIG. 2.

An operation unit including a plurality of operation buttons to input a corresponding command to the control unit 70 to drive the heating coils L and a user interface unit 80 including a display to display information regarding operation of the induction heating cooker are provided at the upper portion of the main body 1.

Therefore, a user places a container P on the cooking plate 2, confirms the position of the container P located on the heating coils L through a display window, and then inputs a power level of the heating coils L on which the container P is located, thereby supplying high-frequency power corresponding to the power level input to the heating coils L.

FIG. 2 is a control block diagram of the induction heating cooker in accordance with the embodiment of the present invention.

With reference to FIG. 2, the induction heating cooker in accordance with the embodiment of the present invention includes 4 sub-control units 60A, 60B, 60C and 60D, the one main control unit 70, and the user interface unit 80.

This embodiment exemplarily illustrates a structure of the heating coils L in which 3 heating coils L1, L2 and L3 (in the first row) and L6, L7 and L8 (in the third row) are disposed in the first row and the third row, and 2 heating coils L4 and L5 are disposed in the second row. That is, 8 heating coils L1 to L8 are disposed throughout the first to third rows.

The respective sub-control units 60A, 60B, 60C and 60D are provided to control driving of two heating coils combined as one control unit from among the plural heating coils L1 to L8, and the main control unit 70 is provided to control the sub-control units 60A, 60B, 60C and 60D.

That is, the first sub-control unit 60A controls driving of the first heating coil L1 and the second heating coil L2 in the first row, the second sub-control unit 60B controls driving of the third heating coil L3 and the fourth heating coil L4, the third sub-control unit 60C controls driving of the fifth heating coil L5 and the sixth heating coil L6, and the fourth sub-control unit 60D controls driving of the seventh heating coil L7 and the eighth heating coil L8.

Since control configurations to drive two heating coils connected to each of the sub-control units 60A, 60B, 60C and 60D from among the eight heating coils L1 to L8 are equal, only a control configuration to drive the two heating coils will be described in detail hereinafter and a description of other control configurations to drive other heating coils will be omitted.

A control device to drive the first heating coil L1 and the second heating coil L2 from among the eight heating coils L1 to L8 includes rectification units 10-1 and 10-2, smoothing units 20-1 and 20-2, inverter units 30-1 and 30-2, sensing units 40-1 and 40-2, driving units 50-1 and 50-2, and the first sub-control unit 60A.

The heating coils L1 and L2 are independently driven by the respective inverter units 30-1 and 30-2 provided corresponding to the number of the heating coils L1 and L2. That is, the first heating coil L1 is driven by the inverter unit 30-1, and the second heating coil L2 is driven by the inverter unit 30-2.

The rectification units 10-1 and 10-2 rectify input AC power, and output rectified pulsation voltage.

The smoothing units 20-1 and 20-2 smooth the pulsation voltage supplied from the rectification units 10-1 and 10-2, and outputs constant DC voltage obtained by smoothing the pulsation voltage.

The inverter units 30-1 and 30-2 respectively include switching devices Q to supply resonant voltage to the heating coils L1 and L2 by switching the DC voltage supplied from the smoothing units 20-1 and 20-2 according to switching control signals of the driving units 50-1 and 50-2, and resonant condensers C connected to the respective heating coils L1 and L2 in parallel and resonating continuously with the respective heating coils L1 and L2.

In the inverter units 30-1 and 30-2, when the switching elements Q are turned on, the heating coils L1 and L2 and the resonant condensers C form parallel resonant circuits. On the other hand, when the switching elements Q are turned off, electric charges having charged the resonant condensers C when the switching elements Q are turned on are discharged, and current in the opposite direction to high-frequency current generated when the switching elements Q are turned on flows along the heating coils L1 and L2.

The sensing units 40-1 and 40-2 are connected to lines between the rectification units 10-1 and 10-2 and the smoothing units 20-1 and 20-2. The sensing units 40-1 and 40-2 detect current values flowing along the respective heating coils L1 and L2 and supply the detected current values to the first sub-control unit 60A to detect heating coils on which the container is located.

The sensing units 40-1 and 40-2 are provided corresponding to the number of the heating coils L1 and L2, and include current transformer sensors (CT sensors or current sensors). Although this embodiment exemplarily describes a method in which current transformer sensors are used as the sensing units 40-1 and 40-2 and heating coils on which the container is located are detected using current values flowing along the respective heating coils L1 and L2 detected by the current transformer sensors, the heating coils on which the container is located may be detected using various kinds of sensors, such as voltage sensors, pressure sensors, infrared sensors, etc. in addition to the current transformer sensors.

The driving units 50-1 and 50-2 output driving signals to the switching elements Q of the inverter units 30-1 and 30-2 according to a control signal from the first sub-control unit 60A to turn the switching elements Q on or off.

The first sub-control unit 60A transmits control signals to the respective driving units 50-1 and 50-2 according to a control signal from the main control unit 70 to control driving of the respective heating coils L1 and L2. Further, the first sub-control unit 60A receives the current values flowing along the respective heating coils L1 and L2 detected by the respective sensing units 40-1 and 40-2, and transmits the current values to the main control unit 70.

The main control unit 70 controls the overall operation of the induction heating cooker. The main control unit 70 is communicably connected to the first to fourth sub-control units 60A, 60B, 60C and 60D respectively controlling driving of two heating coils from among the heating coils L1 to L8, and transmits the control signal to the respective sub-control units 60A, 60B, 60C and 60D to control driving of the heating coils L1 to L8.

The main control unit 70 detects heating coils on which the container is located from among the heating coils L1 to L8 using current values flowing along the respective heating coils L1 to L8 detected by the sensing units 40-1 to 40-8 while controlling operation of the inverter units 30-1 to 30-8 so as to execute a process of supplying high-frequency power alternately to the respective heating coils L1 to L8 according to a container position detection command input through the user interface unit 80.

In order to perform cooking, the main control unit 70 controls operation of the inverter units 30-1 to 30-8 so as to supply high-frequency power corresponding to a power level of heating coils input through the user interface unit 80 to the heating coils judged to be the container is located thereon.

Particularly, the main control unit 70 in accordance with this embodiment prevents interference noise generated due to different operating frequencies of the respective heating coils if at least one container occupies adjacent heating coils.

In more detail, when the input power levels of the adjacent plural heating coils are equal, the main control unit 70 increases duty ratios of pulse width modulation signals until one of the respective heating coils reaches an output current value range corresponding to the input power level.

Further, when the input power levels of the adjacent plural heating coils are different, the main control unit 70 controls pulse width modulation signals of other heating coils based on the heating coil having the maximum input power level. In more detail, the main control unit 70 applies the pulse width modulation signal corresponding to the maximum input power level to the respective heating coils, and executes time division control of other heating coils except for the heating coil having the maximum input power level. Here, time division control is set according to a ratio of the input power level of the respective heating coils to the maximum power level.

The main control unit 70 includes a memory 70-1 installed therein. The memory 70-1 stores a reference value to judge whether or not a container is located on the heating coils L1 to L8 of the induction heating cooker, position information of the container detected according to the container position detection command, and pulse width modulation signals corresponding to respective input power levels, and target output current value range information.

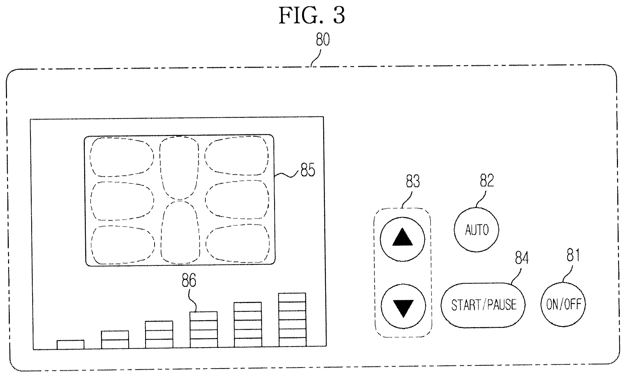

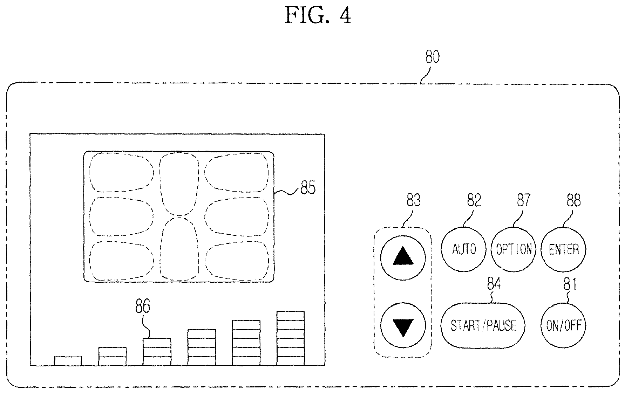

The user interface unit 80, as shown in FIGS. 3 and 4, includes several buttons, such as an ON/OFF button 81, an auto button 82 to input the container position detection command, buttons 83 to adjust power levels of the heating coils, a start/pause button 84 to start or stop cooking operation, etc.

The user interface unit 80 displays position information 85 of the container detected as a result of input of the auto button 82 and displays a power level 86 input through the power level adjustment button 83 by a user at a position of the container.

The user interface unit 80, as shown in FIG. 4, may further include an option button 87 and an enter button 88 to receive the number of containers and the sizes of the containers input by the user.

When plural containers are simultaneously placed on the cooking plate at adjacent positions and the positions of the containers are detected in response to the container position detection command, occupation of the adjacent heating coils by one container is displayed on the user interface unit 80.

The user interface unit 80 in accordance with this embodiment receives the number of containers and receives the positions and occupancies of the respective containers input by a user, thus being capable of more precisely displaying the positions of the containers. Thereby, differently from a user interface unit in which the position of one container placed on the cooking plate is recognized and then another container is placed on the cooking plate, the user interface unit 80 in accordance with this embodiment may precisely recognize the positions of the containers even if the plural containers are simultaneously placed on the cooking plate.

Although this embodiment exemplarily describes the configuration in which the sub-control units 60A, 60B, 60C and 60D are provided to respectively control two heating coils from among the heating coils L1 to L8 and one main control unit 70 is provided to control the sub-control units 60A, 60B, 60C and 60D, the heating coils and the sub-control units may be disposed in other types or only one control unit may be provided to control all the heating coils without employment of the sub-control units.

Hereinafter, a control method of the induction heating cooker to prevent interference noise generated due to different operating frequencies of the heating coils will be described.

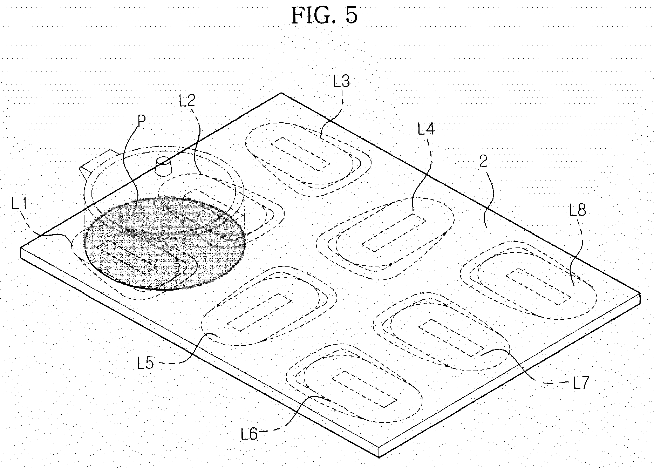

FIG. 5 illustrating location of one container on the first heating coil L1 and the second heating coil L2 in the induction heating cooker in accordance with the embodiment of the present invention. From FIG. 5, it is understood that the container is located with occupancy of the first heating coil L1 greater than the second heating coil L2.

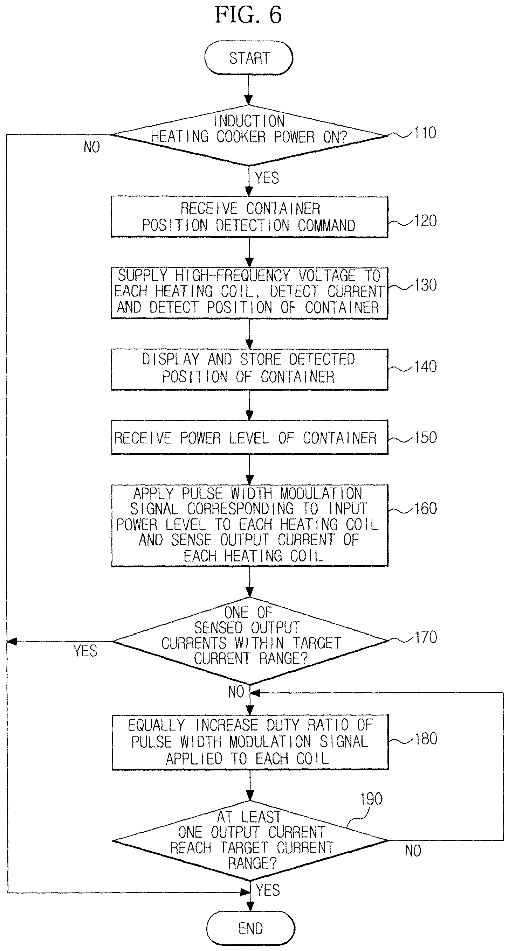

FIG. 6 is a flowchart illustrating a control method of an induction heating cooker in accordance with one embodiment of the present invention.

The control method of the induction heating cooker in accordance with this embodiment is executed to prevent interference noise if one container on the cooking plate occupies plural heating coils, as shown in FIG. 5.

With reference to FIG. 6, a user places a container on the cooking plate to cook food, and then turns the induction heating cooker on by operating the ON/OFF button (Operation 110).

Thereafter, the user inputs a container position detection command by operating the auto button to detect the position on which the container is located on the cooking plate (the positions of the heating coils on which the container is located) (Operation 120).

When the container position detection command is input in response to user operation of the auto button, the main control unit transmits the container position detection command to the respective sub-control units (the first to fourth sub-control units) to detect current values flowing along the respective heating coils in the induction heating cooker.

The respective sub-control units having received the container position detection command transmit control signals to the respective driving units to supply high-frequency power to the respective heating coils for a designated time (about 0.5∼2 seconds) (Operation 130).

When the high-frequency power is supplied to the heating coils, the respective sensing units of the heating coils detect current values flowing along the respective heating coils and transmit the detected current values to the respective sub-control units (Operation 130).

The sub-control units transmit the current values to the main control unit, and then the main control unit judges whether or not the detected current values are more than a predetermined value (Operation 130). Here, the predetermined value is a reference value to judge whether or not the container is located on the heating coils, and is stored in advance in the memory of the main control unit.

As a result of the judgment, when the detected current values flowing along the heating coils exceed the predetermined value, the main control unit stores information representing that the container is located on the corresponding heating coils in the memory, and when the detected current values flowing along the heating coils are not more than the predetermined value, the main control unit stores information representing that the container is not located on the corresponding heating coils in the memory (Operation 140).

Since the container is located on the first heating coil L1 and the second heating coil L2, as shown in FIG. 5, information representing that the container is located on the first heating coil L1 and the second heating coil L2 is stored in the memory and information representing that the container is not located on the remaining heating coils L3 to L8 are stored in the memory.

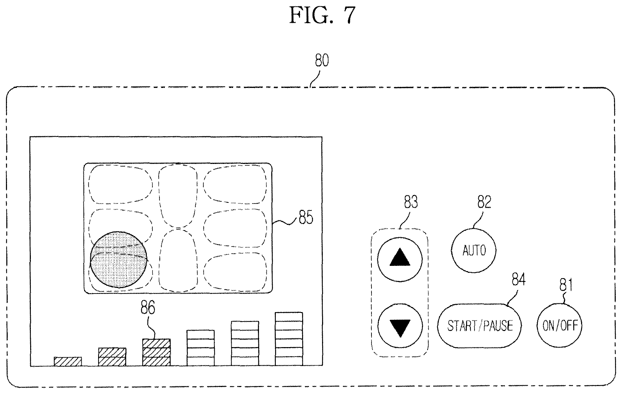

When the container position detection operation of all the heating coils has been completed, the position information of the container stored in the memory is displayed through the user interface unit 80, as shown in FIG. 7 (Operation 140). The user interface unit 80 of FIG. 7 displays the position of the container located on the heating coils L1 and L2 on a display plane on which an arrangement structure of the heating coils L1 to L8 are engraved through a lighting method.

The user confirms the position of the container, as shown in FIG. 7, and inputs a desired power level (a cooking degree) by operating the power level adjustment button 83 (Operation 150). The input power level may be displayed in the form of a bar graph 86 below the area in which the position information of the heating coils is displayed. Here, the height of the bar graph 86 increases in proportion to the power level.

When the power level is input, the user interface unit 80 receives a cooking start command through the start/pause button 84, and transmits the cooking start command to the main control unit. The main control unit searches a pulse width modulation signal corresponding to the power level in the memory, and transmits the corresponding pulse width modulation signal to the sub-control unit controlling the heating coils on which the container is located (Operation 160).

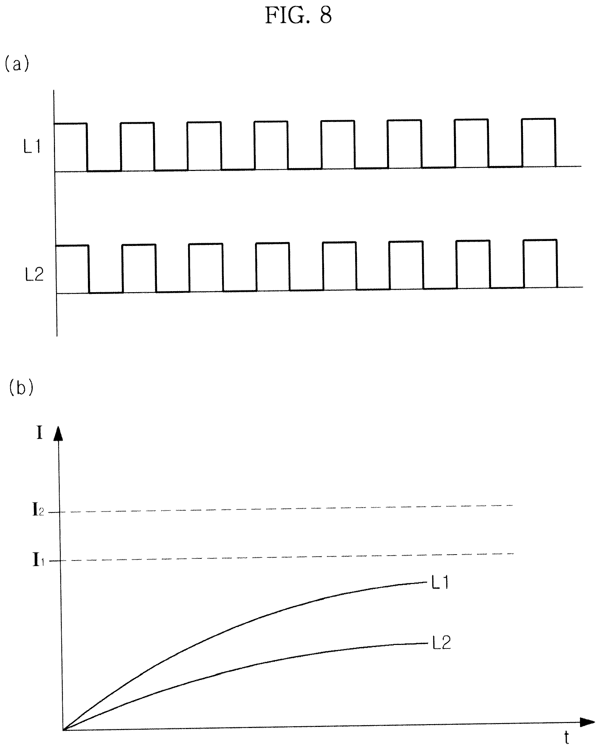

For example (with reference to FIG. 5), the main control unit transmits the pulse width modulation signal to the first sub-control unit controlling the first heating coil L1 and the second heating coil L2, as shown in FIG. 8(a), and the first sub-control unit controls switching of the inverter units of the first heating coil L1 and the second heating coil L2 according to the pulse width modulation signal (with reference to FIG. 8(a)).

When the heating coils on which the container is located are driven by the pulse width modulation signal, the sensing units sense currents output from the respective heating coils (Operation 160).

The sensed output currents differ according to areas of the heating coils occupied by the container, as shown in FIG. 8(b). With reference to FIG. 8(b), since the container occupies the first heating coil L1 and the second heating coil L2 and the area of the first heating coil L1 occupied by the container is greater than the area of the second heating coil L2 occupied by the container (with reference to FIG. 5), the current output from the first heating coil L1 is greater than the current output from the second heating coil L2.

That is, even if the same pulse width modulation signal is applied to the respective heating coils, the output currents differ according to the areas of the heating coils occupied by the container, and thus the heating coil having the small occupation area does not heat the container at the desired power level.

Therefore, a process of controlling the respective heating coils such that the heating coils may output currents in a target current range corresponding to the input power level is required.

First, a duty ratio of the pulse width modulation signal applied to the respective heating coils is increased. When the duty radio of the pulse width modulation signal is increased, time of a high-level section is extended to be longer than time of a low-level section, and when the pulse width modulation signal having the increased duty ratio is applied to the respective heating coils, the output currents of the respective heating coils are increased.

However, in order to increase the duty ratio such that the heating coils having different output currents output currents within the target current range, different pulse width modulation signals are applied to adjacent heating coils. That is, pulse width modulation signals having different operating frequencies are applied to the adjacent heating coils, and thus interference noise due to a difference between the operating frequencies is generated.

Therefore, in order to solve generation of interference noise, in this embodiment, a pulse width modulation signal is applied based on at least one of the output currents of the adjacent heating coils (Operations 170, 180 and 190).

In more detail, in this embodiment, at least one of the output currents of the heating coils is within the target output current range corresponding to the input power level (Operation 170). With reference to FIG. 8(b), the first heating coil and the second heating coil are partially occupied by the container, and thus it is confirmed that the current values of the first and second heating coils are not within the target output current range.

When all of the output currents of the respective heating coils are not within the target output current range (the respective heating coils are partially occupied by the container), the main control unit controls the heating coils based on at least one of the output currents of the adjacent heating coils. That is, the main control unit equally increases the duty ratios of the pulse width modulation signals applied to the remaining heating coils until at least one output current reaches the target current range (Operations 180 and 190). Here, the duty ratios of the pulse width modulation signals may be regularly increased at a predetermined time interval. In this embodiment, the duty ratios of the pulse width modulation signals are increased at an interval of 1 second.

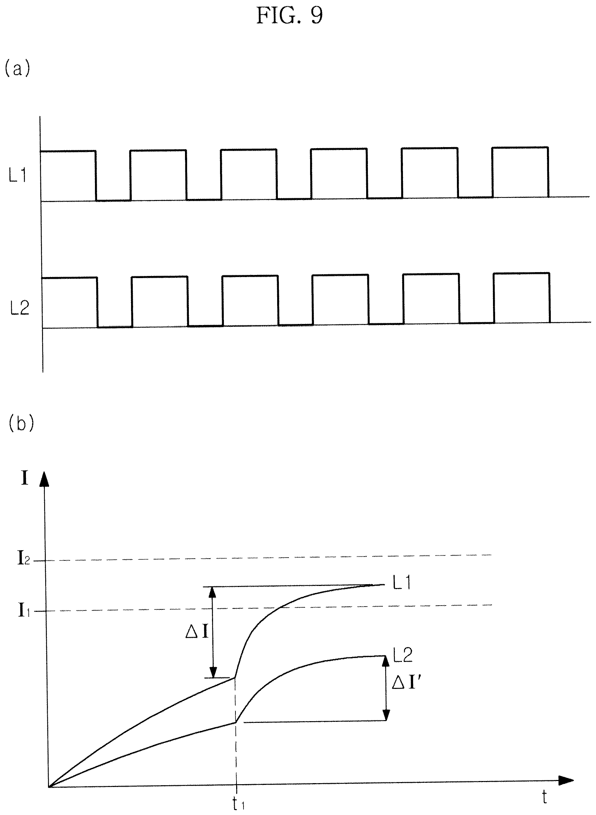

FIGS. 9(a) and 9(b) are graphs illustrating pulse width modulation signals adjusted to control output of target output current while preventing interference noise and output currents at this time.

With reference to FIGS. 9(a) and 9(b), the main control unit regularly increases the duty ratios of the pulse width modulation signals applied to the first heating coil L1 and the second heating coil L2 at a predetermined time interval until the output current value of the first heating coil L1 having a higher occupation rate from among the first heating coil L1 and the second heating coil L2 reaches a target current range 11∼12.

Particularly, the main control unit in accordance with this embodiment increases the duty ratios of the pulse width modulation signals, as shown in FIG. 9(a), and thus allows the pulse width modulation signals applied to the respective heating coils to be equal.

When the pulse width modulation signals having the increased duty ratios are applied to the respective heating coils L1 and L2, the output current of the first heating coil L1 is increased by a current variation Δl from a control point of time t1 and reaches the target current range 11∼12, and the output current of the second heating coil L2 is increased by a current variation Δl' smaller than the current variation Δl of the first heating coil L1 from the control point of time.

That is, in this embodiment, the pulse width modulation signals having the same operating frequency are applied to the adjacent heating coils even if output currents of the remaining heating coils, except for the heating coil serving as a reference of duty ratio increase, do not precisely reach the target current range, thereby preventing interference noise.

Although this embodiment illustrates application of the pulse width modulation signals based on the heating coil having the high occupation rate, application of the pulse width modulation signals may be controlled based on other heating coils as long as the pulse width modulation signals having the equally increased duty ratio are applied to all the heating coils.

Until now, the control method of the induction heating cooker if one container occupies plural heating coils has been described.

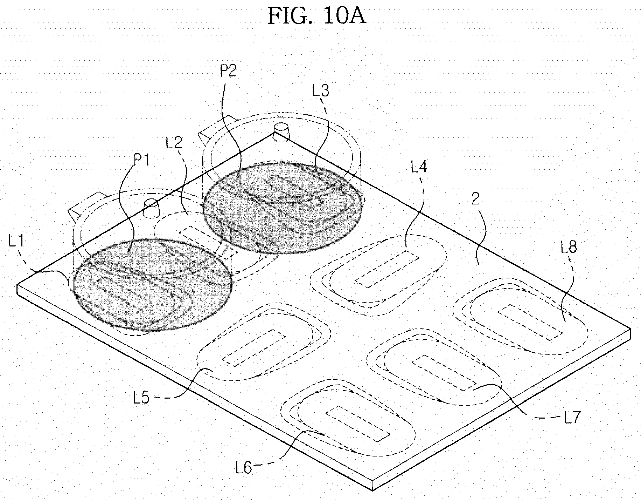

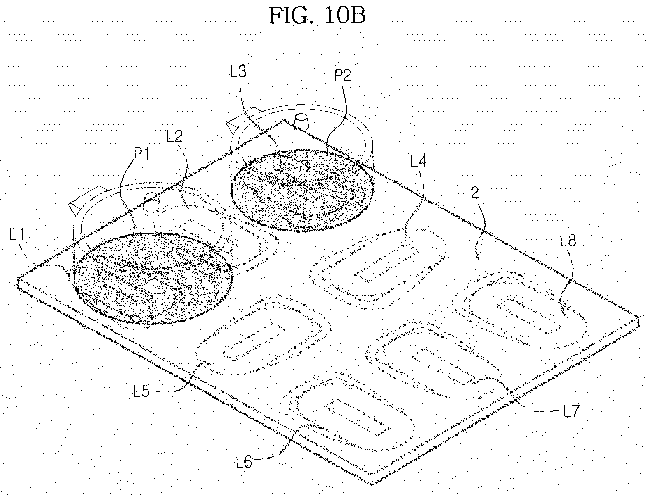

Hereinafter, a control method of the induction heating cooker if plural adjacent containers P1 and P2 placed on the cooking plate occupy a heating coil (a second heating coil) in common, as shown in FIG. 10A, and a control method of the induction heating cooker if plural adjacent containers P1 and P2 placed on the cooking plate do not occupy a heating coil in common, as shown in FIG. 10B, will be described.

Although FIGS. 10A and 10B illustrate two containers placed on the cooking plate at adjacent positions, plural containers other than two containers may be placed on the cooking plate at adjacent positions.

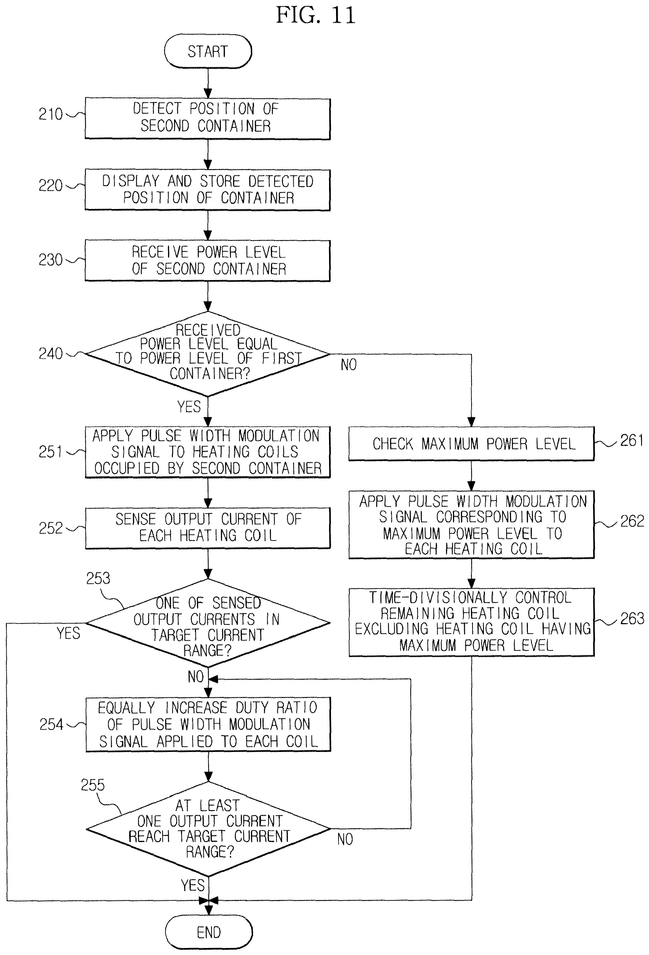

FIG. 11 is a flowchart illustrating a control method of an induction heating cooker in accordance with another embodiment of the present invention.

First, it is assumed that the induction heating cooker in accordance with this embodiment is driven through a method in which the user interface unit 80 shown in FIG. 3 is provided to sense positions of the heating coils occupied by containers placed on the cooking plate one by one and power levels of the containers are input.

That is, a control method of the induction heating cooker if, while one container (hereinafter, a first container) P1 is heated, another container (hereinafter, a second container) P2 is placed adjacent to the first container P1 and is then heated will be described with reference to FIG. 11.

While the first container P1 is heated, a user places the second container P2 on the cooking plate adjacent to the first container P1 and then operates the auto button to detect the position of the second container P2 (Operations 210 and 220). When a container position detection command is input, the main control unit applies high-frequency power to the remaining heating coils L3∼L8 except for the heating coils L1 and L2 (with reference to FIGS. 10A and 10B) occupied by the first container P1 for a designated time, detects the position of the second container P2 through output currents of the respective heating coils L3∼L8, and displays the position of the second container P2 through the user interface unit (Operations 220 and 230).

Further, the main control unit may judge whether or not a heating coil occupied by the first container P1 and the second container P2 in common is present based on whether or not the output currents of the heating coils occupied by the first container P1 are changed.

In more detail, the main control unit confirms rise of the output currents of the heating coils occupied by the first container P1 using a principle in which when the second container P2 is placed on the cooking plate, an occupation area of a heating coil occupied by both containers P1 and P2 rises, and judges the heating coil, the output current of which rises, to be the heating coil occupied by the first container P1 and the second container P2 in common.

That is, even if a heating coil L2 occupied by the first container P1 and the second container P2 in common is present, as shown in FIG. 10A, the precise position of the second container P2 may be displayed on the user interface unit.

When the position of the second container P2 has been searched (Operations 220 and 230), the user inputs a power level of the second container P2 through the +/- button (Operation 240).

Here, when the power level of the second container P2 is equal to the power level of the first container P1 (Operation 240), the heating coils occupied by the first container P1 and the second container P2 may be controlled such that the output currents of the heating coils reach a target current range while preventing interference noise through the control process of FIG. 6.

That is, a pulse width modulation signal causing one out of the output currents of the heating coils occupied by the plural containers to reach the target current range is equally applied to the respective heating coils (Operations 251∼255).

On the other hand, when the power level of the second container P2 is different from the power level of the first container P1 (Operation 240), the heating coils are controlled based on the maximum power level from among the power level of the first container P1 and the power level of the second container P2 (Operations 261∼263).

When the input power levels of the plural containers are different, a pulse width modulation signal having a duty ratio corresponding to the maximum power level from among the input power levels is applied to the respective heating coils, and the pulse width modulation signal is intermittently applied to the remaining heating coils except for the heating coils occupied by the container having the maximum power level (Operations 261∼263).

Therefore, the same pulse width modulation signal is applied to all the heating coils occupied by the containers, thereby preventing interference noise generated due to application of pulse width modulation signals having different operating frequencies to the adjacent heating coils.

In more detail, the pulse width modulation signal is continuously applied to the heating coils occupied by the container having the maximum power level, and the pulse width modulation signal is intermittently applied to the remaining heating coils in a manner in which an ON section and an OFF section are periodically repeated in consideration of the maximum power level and the pulse width modulation signal is applied only during the ON section.

That is, the remaining heating coils are intermittently operated in the ON section adjusted in proportion to a ratio of the input power level of the remaining heating coils to the maximum power level.

For example, when the input power level of the first container P1 is '6' and the input power level of the second container P2 is '3', the main control unit judges that the maximum power level is '6' (Operation 261), and equally applies a pulse width modulation signal corresponding to the maximum power level to the heating coils occupied by the first container P1 and the second container P2 (Operation 272).

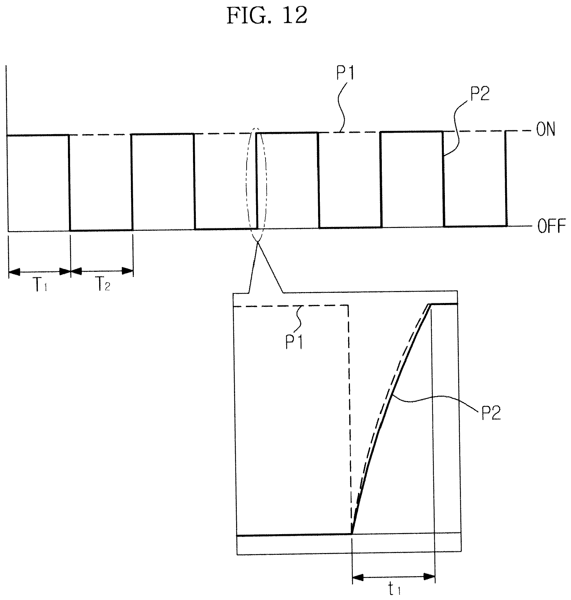

Further, the main control unit continuously applies the pulse width modulation signal to the heating coils occupied by the first container P1 while intermittently applying the pulse width modulation signal to the heating coils occupied by the second container P2. FIG. 12 is a graph illustrating operation timing of the heating coils occupied by the first container P1 and the second container P2.

With reference to FIG. 12, the inverter units of the heating coils occupied by the first container P1 are continuously operated according to the pulse width modulation signal, but the inverter units of the heating coils occupied by the second container P2 are intermittently operated. The inverter units of the heating coils occupied by the second container P2 are intermittently operated according to the ratio of the input power level (3) of the second container P2 to the maximum power level (6). Since the input power level (3) of the second container P2 is the half the maximum power level (6), a ratio of operating time (the ON section) T1 to non-operating time (the OFF section) T2 of the inverter units of the heating coils occupied by the second container P2 is 1:1. That is, the ON section T1 and the OFF section T2 are repeated at the same interval.

The intermittent operation of the remaining heating coils (the heating coils occupied by the second container P2) except for the heating coils having the maximum power level (the heating coils occupied by the first container P1) may cause noise. In order to turn a heating coil off and then turn the heating coil on, as shown in FIG. 12, the heating coil is turned on after a designated rising time t1 has elapsed from turning-off of the heating coil. Thereby, at each point of time when the intermittently operated heating coils are turned off and then turned on, interference noise is generated due to a difference of operating frequencies.

Therefore, the main control unit in accordance with the embodiment turns other heating coils off and then turns the heating coils on together with turning-on of the intermittently operated heating coils. That is, the main control unit turns the heating coils occupied by the first container P1 off and then turns the heating coils on at each point of time when the heating coils occupied by the second container P2 are turned off and then turned on, thereby enabling the operating frequencies of the respective heating coils to be equal to each other.

Although this embodiment illustrates the control method of the induction heating cooker according to whether or not power levels of two containers are equal if the two containers are placed on the induction heating cooker, the same control method of the induction heating cooker may be applied if plural containers other than two are placed on the induction heating cooker at adjacent positions.

Further, the same control method is applied if cooking of at least one container has been completed and then the pause button to complete driving of the at least one container is selected under the condition that plural containers are placed on the induction heating cooker at adjacent positions.

In more detail, if the respective containers are operated at different power levels and operation of the container operated at the maximum power level has been completed, the heating coils are controlled based on the next-ranking power level. That is, a pulse width modulation signal corresponding to the next-ranking power level is applied to all the heating coils, and the heating coils having the power levels lower than the next-ranking power level are controlled to be intermittently operated according to a ratio of the power level of the respective heating coils to the next-ranking power level.

Further, when the respective containers are operated at the same power level and cooking of at least one container has been completed (after selection of the pause button), the main control unit determines whether or not control is carried out based on whether or not currents output from the remaining heating coils are changed. When cooking of a container occupying at least one heating coil in common has been completed, the output current of the at least one heating coil is changed. Therefore, the pulse width modulation signal adjusted so that the output current of the at least one heating coil based on the changed output currents reaches the target current range is equally applied to the respective heating coils.

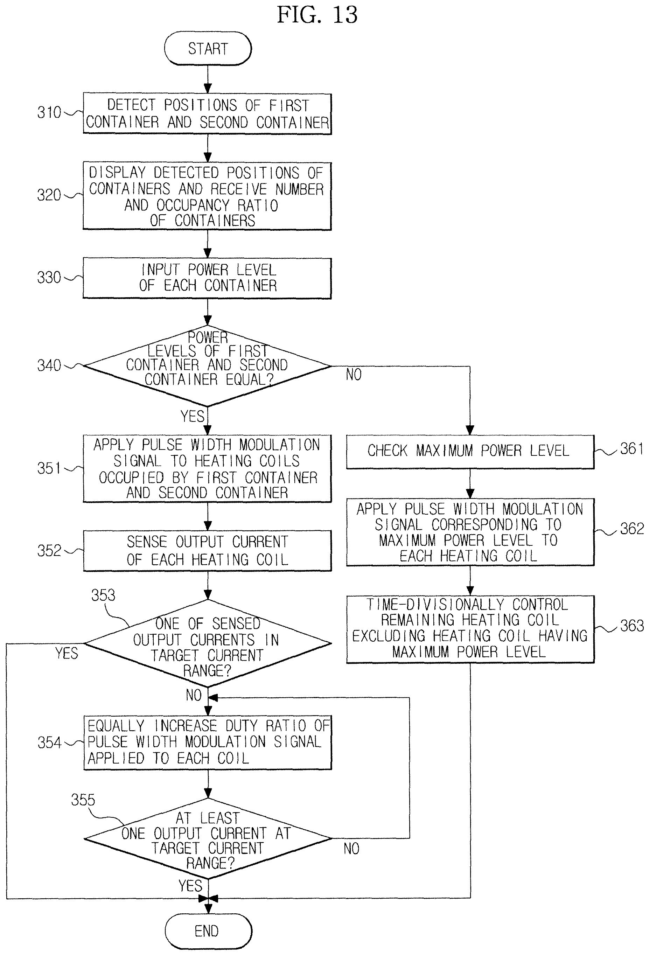

FIG. 13 is a flowchart illustrating a control method of an induction heating cooker in accordance with another embodiment of the present invention.

First, the induction heating cooker in accordance with this embodiment is provided with the user interface unit 80 shown in FIG. 4 and precisely detects the positions of respective containers if plural containers are simultaneously placed on the induction heating cooker as well as if the plural containers are placed on the induction heating cooker one by one.

A control method of the induction heating cooker if, while one container is heated, another container is placed adjacent to the container and is then heated in accordance with this embodiment is the same as those in accordance with the earlier embodiment shown in FIG. 11, and thus only a control method of the induction cooker if a first container P1 and a second container P2 are simultaneously placed will be described.

With reference to FIG. 13, a user simultaneously places the first container P1 and the second container P2 on the induction heating cooker at adjacent positions, as shown in FIGS. 10A and 10B, and then operates the auto button to detect the positions of the containers P1 and P2 (Operation 310).

When a container position detection command is input in such a manner, the main control unit detects the positions of heating coils occupied by the containers P1 and P2 by applying high-frequency power to respective heating coils and comparing detected currents of the heating coils with a predetermined value, and displays the detected positions through the user interface unit 80 (Operations 310 and 320).

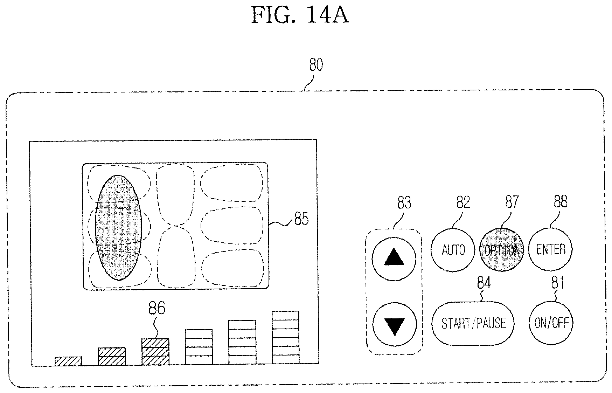

Since the first to third heating coils L1 to L3 are occupied by the first container P1 and the second container P2, the user interface unit 80 displays occupation of the first to third heating coils L1 to L3 by one container, as the position information 85 of FIG. 14A.

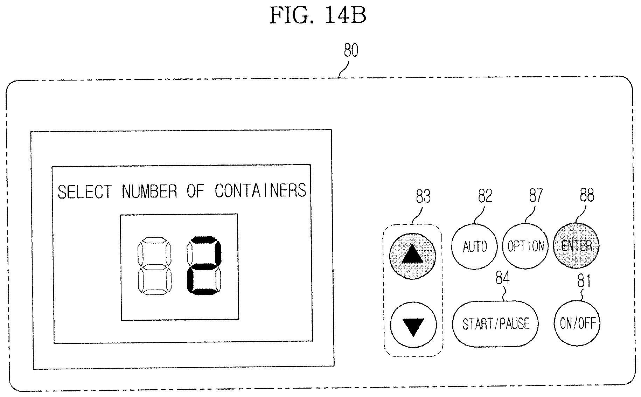

Thereafter, the user selects the option buttons 87, as shown in FIGS. 14A and 14B, so that occupation of the first to third heating coils L1 to L3 by two containers is displayed on the user interface unit 80, and inputs the number of the containers through the power level adjustment button 83 (Operation 320).

That is, the user may input the number of the containers through the operation buttons, and select occupancies of the containers on the respective heating coils by the containers according to the sizes of the containers after the number of the containers is input.

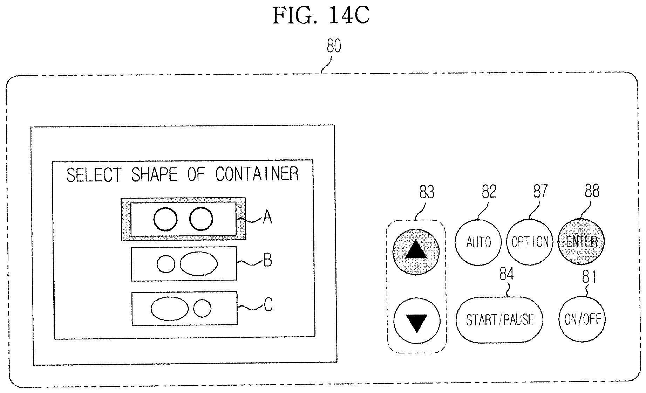

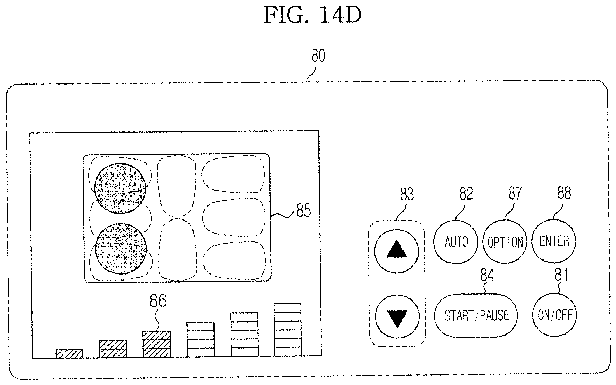

In more detail, the user may variously select occupancies of the containers, as shown in FIG. 14C. Occupancies of the containers may be selected from among the case A in which the sizes of the containers are nearly equal and the cases B and C in which the size of one container is greater than the size of the other container, and as a result of the selection, the positions of the respective containers are precisely displayed, as shown in FIG. 14D.

When the positions of the first container P1 and the second container P2 are confirmed through the user interface unit 80 in such a manner (Operations 310 and 320), operating power levels of the respective containers P1 and P2 are input (Operation 330).

When the positions of the respective containers P1 and P2 are confirmed and the power levels of the respective containers P1 and P2 are input (Operation 330), the main control unit judges whether or not the power levels of the respective containers P1 and P2 are equal (Operation 340).

As a result of the judgment, upon judging that the power levels of the respective containers are equal (Operation 340), the same pulse width modulation signal having an increased duty ratio based on the output currents of the heating coils occupied by the plural containers is applied to the respective heating coils, as described with reference to FIG. 6 (Operations 351∼355).

On the other hand, upon judging that the power levels of the respective containers are different (Operation 340), a pulse width modulation signal corresponding to the maximum power level is applied to the respective heating coils, as described with reference to FIG. 11 (Operations 361 and 362). Here, the pulse width modulation signal is continuously applied to the heating coils having the maximum power level and is intermittently applied to the remaining heating coils according to the power levels of the remaining heating coils (Operation 363).

That is, turning-on/off of the intermittently operated heating coils are controlled at a designated ratio in proportions to a ratio of the input power level to the maximum power level.

Further, the heating coils having the maximum power level are turned off and are then turned on just before the intermittently operated heating coils are turned on, thereby preventing interference noise generated due to the rising time.

Although this embodiment illustrates the control method of the induction heating cooker according to whether or not power levels of two containers are equal if the two containers are placed on the induction heating cooker, the same control method of the induction heating cooker may be applied if plural containers other than two are placed on the induction heating cooker at adjacent positions.

Further, the same control method is applied if cooking of at least one container has been completed and then the pause button to complete driving of the at least one container is selected under the condition that plural containers are placed on the induction heating cooker at adjacent positions.

In more detail, if the respective containers are operated at different power levels and operation of the container operated at the maximum power level has been completed, the heating coils occupied by the containers are controlled based on the next-ranking power level.

Further, when the respective containers are operated at the same power level and cooking of at least one container has been completed (after selection of the pause button), the main control unit determines whether or not control is carried out based on whether or not currents output from the remaining heating coils are changed.

As is apparent from the above description, a control method of an induction heating cooker in accordance with one embodiment of the present invention allows operating frequencies of pulse width modulation signals applied to plural adjacent heating coils to coincide with each other at all times, thereby preventing interference noise generated due to different switching frequencies of inverter units.

Further, the control method of the induction heating cooker in accordance with the embodiment of the present invention controls output currents of the respective heating coils to reach a target value range corresponding to an input power level without generation of interference noise if the output currents of the respective heating coils do not reach a target value due to placement of a container located between plural adjacent heating coils or the container formed of a feebly magnetic material. Thereby, the heating coils may be close to a user' desired power level, and thus heating efficiency may be improved.

Although a few embodiments of the present invention have been shown and described, it would be appreciated by those skilled in the art that changes may be made in these embodiments without departing from the principles the invention, the scope of which is defined in the claims and their equivalents.

## Claims

1. A control method of an induction heating cooker, which comprises a cooking plate (2), a plurality of heating coils (L) to heat containers (P) placed on the cooking plate, a plurality of inverter units (30) to respectively supply high-frequency power to the plurality of heating coils, and a plurality of sensing units (40) to respectively sense currents flowing along the plurality of heating coils (L) according to the high-frequency power supplied by the plurality of inverter units (30), the control method comprising:
detecting (120, 140, 150) at least one heating coil occupied by a first container from among the plurality of heating coils (L);
switching (160) the plurality of inverter units (30) so that a power level input by a user is applied to the detected at least one heating coil (L);
**characterized by**
determining (170), if the at least one heating coil (L) occupied by the first container (P) includes plural heating coils (L), whether or not output currents within a target output current range corresponding to the input power level are present from among the output currents of the respective heating coils (L) sensed by the sensing units (40); and
equally adjusting (180) duty ratios of pulse width modulation signals applied to the inverter units (30) of the respective heating coils (L) until at least one of the output currents reaches the target output current range, if no output current within the target output current range is present.

2. The control method according to claim 1, wherein the duty ratios of the pulse width modulation signals are changed (180) until the maximum output current from among the output currents of the heating coils reaches the target output current range.

3. The control method according to claim 1, further comprising:
detecting (210) at least one heating coil occupied by a second container, if the second container is additionally placed on the cooking plate adjacent to the first container during cooking of the first container; and
judging (240) whether or not input power levels of the first container and the second containers are equal by confirming the power level of the second container input through a user interface unit.

4. The control method according to claim 3, further comprising applying (262) a pulse width modulation signal having an equal duty ratio to the respective heating coils and intermittently (263) applying the pulse width modulation signal to at least one of the heating coils, upon judging that the input power levels of the first container and the second container are different.

5. The control method according to claim 4, further comprising:
judging (261) the maximum power level from among the input power levels of the first container and the second container;
applying (262) a pulse width modulation signal having a duty ratio corresponding to the maximum power level to the respective heating coils (L); and
turning (263) at least one heating coil, except for the heating coils having the maximum power level, on/off and applying the pulse width modulation signal to the at least one heating coil only during an ON section to intermittently operate the at least one heating coil.

6. The control method according to claim 5, wherein the intermittent operation of the at least one heating coil (L) includes setting a ratio of the ON section to an OFF section of the at least one heating coil in proportion to a ratio of the power level of the corresponding heating coil to the maximum power level.

7. The control method according to claim 6, wherein the intermittent operation of the at least one heating coil (L) includes turning the heating coils having the maximum power level off and then turning the heating coils having the maximum power level on simultaneously with turning-on of the at least one intermittently operated heating coil when the at least one intermittently operated heating coil is switched from the OFF section to the ON section.

8. The control method according to claim 3, wherein the detection of the at least one heating coil occupied by the first container includes:
controlling operation of the plurality of inverter units (30) so that the high-frequency power is alternately supplied to the plurality of heating coils (L); and
judging that the corresponding heating coil is occupied by the first container, if a current value sensed through the corresponding sensing unit (40) is more than a predetermined current value as a result of the operation of the plurality of inverter units (30).

9. The control method according to claim 8, wherein the detection of the at least one heating coil occupied by the second container includes:
controlling operation of the plurality of inverter units (30) so that the high-frequency power is alternately supplied to the remaining heating coils except for the at least one heating coil occupied by the first container during cooking of the first container; and
judging that the corresponding heating coil is occupied by the second container, if a current value sensed through the corresponding sensing unit (40) is more than the predetermined current value as a result of the supply of the high-frequency power to the remaining heating coils.

10. The control method according to claim 9, further comprising, if the output current of at least one of the at least one heating coil occupied by the first container is increased after the second container is placed on the cooking plate, judging the heating coil having the increased output current to be occupied in common by the first container and the second container.

11. A control method of an induction heating cooker, which comprises a cooking plate (2), a plurality of heating coils (L) to heat containers (P) placed on the cooking plate (2), a plurality of inverter units (30) to respectively supply high-frequency power to the plurality of heating coils (L), and a plurality of sensing units (40) to respectively sense currents flowing along the plurality of heating coils (L) according to the high-frequency power supplied by the plurality of inverter units (40), the control method comprising:
detecting plural heating coils occupied by plural containers from among the plurality of heating coils (L);
**characterized by**
judging whether or not input power levels of the detected heating coils input by a user are equal;
equally adjusting (254) duty ratios of pulse width modulation signals applied to the inverter units (30) of the respective heating coils until at least one of output currents sensed by the sensing units (40) of the detected heating coils reaches (255) a target output current range corresponding to the input power level, upon judging that input power levels of the detected heating coils input by a user are equal; and
applying a pulse width modulation signal having an equal duty ratio to the detected heating coils and intermittently applying the pulse width modulation signal to at least one of the heating coils, upon judging that the input power levels are different.

12. The control method according to claim 11, wherein the induction heating cooker further includes a user interface unit (80) to display the number and position information of the containers placed on the heating coils and to input the number and sizes of the containers if the displayed number of the containers does not coincide with the number of the containers placed on the heating coils.

13. The control method according to claim 12, wherein the duty ratios of the pulse width modulation signals are changed until the maximum output current from among the output currents of the heating coils reaches the target output current range.

14. The control method according to claim 11, further comprising:
judging (261) the maximum power level from among the input power levels, upon judging that the input power levels are different;
applying (262) a pulse width modulation signal having a duty ratio corresponding to the maximum power level to the respective heating coils; and
periodically turning at least one heating coil, except for the heating coils having the maximum power level, on/off and applying the pulse width modulation signal to the at least one heating coil only during an ON section to intermittently operate the at least one heating coil.

15. The control method according to claim 14, wherein the intermittent operation of the at least one heating coil includes setting a ratio of the ON section to an OFF section of the at least one heating coil in proportion to a ratio of the input power level of the corresponding heating coil to the maximum power level, turning the heating coils having the maximum power level off and then turning the heating coils having the maximum power level on simultaneously with turning-on of the at least one intermittently operated heating coil when the at least one intermittently operated heating coil is switched from the OFF section to the ON section.

## Patentansprüche

1. Steuerungsverfahren in einem Induktionsherd, der eine Kochplatte (2), mehrere Heizspulen (L) zum Erwärmen von Behältern (P), die auf der Kochplatte platziert sind, mehrere Umrichtereinheiten (30), um entsprechend Hochfrequenzleistung den mehreren Heizspulen zuzuführen, und mehrere Sensoreinheiten (40) aufweist, um Ströme zu erfassen, die in den mehreren Heizspulen (L) entsprechend der von den mehreren Umrichtereinheiten (30) zugeführten Hochfrequenzleistung fließen, wobei das Steuerungsverfahren umfasst:
Erfassen (120, 140, 150) mindestens einer Heizspule aus den mehreren Heizspulen (L); die durch einen ersten Behälter besetzt ist
Schalten (160) der mehreren Umrichtereinheiten (30) derart, dass eine Leistungsstufe, die von einem Benutzer eingegeben wird, für die erfasste mindestens eine Heizspule (L) verwendet wird;
**gekennzeichnet durch**
Ermitteln (170), wenn die durch den ersten Behälter (P) besetzte mindestens eine Heizspule (L) mehrere Heizspulen (L) mit einschließt, ob Ausgangsströme innerhalb eines Soll-Bereichs für Ausgangsströme, der der eingegebenen Leistungsstufe entspricht, in den Ausgangsströmen der entsprechenden Heizspulen (L), die von den Sensoreinheiten (40) erfasst werden, vorhanden sind oder nicht; und
gleiches Einstellen (180) von Tastverhältnissen von Pulsbreitenmodulationssignalen, die den Umrichtereinheiten (30) der entsprechenden Heizspulen (L) zugeleitet werden, bis mindestens einer der Ausgangsströme in dem Soll-Bereich für Ausgangsströme liegt, wenn kein Ausgangsstrom innerhalb des Soll-Bereichs für Ausgangsströme liegt.

2. Steuerungsverfahren nach Anspruch 1, wobei die Tastverhältnisse der Pulsbreitenmodulationssignale geändert werden (180), bis der maximale Ausgangsstrom der Ausgangsströme der Heizspulen in dem Soll-Bereich für Ausgangsströme liegt.

3. Steuerungsverfahren nach Anspruch 1, das ferner umfasst:
Erfassen (210) mindestens einer Heizspule, die durch einen zweiten Behälter besetzt ist, wenn der zweite Behälter während des Kochvorgangs mit dem ersten Behälter zusätzlich auf der Kochplatte benachbart zu dem ersten Behälter platziert wird; und
Ermitteln (240), ob eingegebene Leistungsstufen für den ersten Behälter und den zweiten Behälter gleich sind, indem die Leistungsstufe für den zweiten Behälter, die über eine Benutzerschnittstelleneinheit eingegeben wird, bestätigt wird.

4. Steuerungsverfahren nach Anspruch 3, das ferner umfasst: Zuführen (262) eines Pulsbreitenmodulationssignals mit gleichem Tastverhältnis zu entsprechenden Heizspulen und intermettierendes (263) Zuführen des Pulsbreitenmodulationssignals zu mindestens einer der Heizspulen, wenn ermittelt wird, dass die eingegebenen Leistungsstufen für den ersten Behälter und für den zweiten Behälter sich voneinander unterscheiden.

5. Steuerungsverfahren nach Anspruch 4, das ferner umfasst:
Ermitteln (261) der maximalen Leistungsstufen aus den eingegebenen Leistungsstufen für den ersten Behälter und den zweiten Behälter;
Zuführen (262) eines Pulsbreitenmodulationssignals mit einem Tastverhältnis, das der maximalen Leistungsstufe entspricht, zu den entsprechenden Heizspulen (L); und
Einschalten/Ausschalten (263) mindestens einer Heizspule, ausgenommen die Heizspule mit der maximalen Leistungsstufe, und Zuführen des Pulsbreitenmodulationssignals zu der mindestens einen Heizspule nur während einer EIN-Phase, um die mindestens eine Heizspule intermittierend zu betreiben.

6. Steuerungsverfahren nach Anspruch 5, wobei der intermittierende Betrieb der mindestens einen Heizspule (L) Einstellen eines Verhältnisses der EIN-Phase zu einer AUS-Phase der mindestens einen Heizspule anteilsmäßig zu einem Verhältnis der Leistungsstufe der entsprechenden Heizspule zu der maximalen Leistungsstufe beinhaltet.

7. Steuerungsverfahren nach Anspruch 6, wobei der intermittierende Betrieb der mindestens einen Heizspule (L) Ausschalten der Heizspulen mit der maximalen Leistungsstufe und anschließendes Einschalten der Heizspulen mit der maximalen Leistungsstufe gleichzeitig mit dem Einschalten der mindestens einen intermittierend betriebenen Heizspule umfasst, wenn die mindestens eine intermittierend betriebene Heizspule von der AUS-Phase in die EIN-Phase umgeschaltet wird.

8. Steuerungsverfahren nach Anspruch 3, wobei das Erfassen der mindestens einen Heizspule, die durch den ersten Behälter besetzt ist, umfasst:
Steuern des Betriebs der mehreren Umrichtereinheiten (30) derart, dass die Hochfrequenzleistung den mehreren Heizspulen (L) abwechselnd zugeführt wird; und
Ermitteln, dass die entsprechende Heizspule durch den ersten Behälter besetzt ist, wenn als Folge des Betriebs der mehreren Umrichtereinheiten (30) ein durch die entsprechende Sensoreinheit (40) erfasster Stromwert größer ist als ein vorbestimmter Stromwert.

9. Steuerungsverfahren nach Anspruch 8, wobei das Erfassen der mindestens einen Heizspule, die durch den zweiten Behälter besetzt ist, umfasst:
Steuern des Betriebs der mehreren Umrichtereinheiten (30) derart, dass die Hochfrequenzleistung den verbleibenden Heizspulen mit Ausnahme der mindestens einen Heizspule, die während des Kochvorgangs mit dem ersten Behälter durch den ersten Behälter besetzt ist, abwechselnd zugeführt wird; und
Ermitteln, dass die entsprechende Heizspule durch den zweiten Behälter besetzt ist, wenn als Folge der Zuführung der Hochfrequenzleistung zu den verbleibenden Heizspulen ein durch die entsprechende Sensoreinheit (40) erfasster Stromwert größer als der vorbestimmte Stromwert ist.

10. Steuerungsverfahren nach Anspruch 9, das ferner umfasst: wenn der Ausgangsstrom mindestens einer der mindestens einen Heizspule, die durch den ersten Behälter besetzt ist, ansteigt, nachdem der zweite Behälter auf der Kochplatte platziert ist, Ermitteln, dass die Heizspule mit dem erhöhten Ausgangsstrom gemeinsam durch den ersten Behälter und den zweiten Behälter besetzt ist.

11. Steuerungsverfahren für einen Induktionsherd, der eine Kochplatte (2), mehrere Heizspulen (L) zum Erwärmen von Behältern (P), die auf der Kochplatte (2) platziert sind, mehrere Umrichtereinheiten (30), um entsprechend Hochfrequenzleistung den mehreren Heizspulen (L) zuzuführen, und mehrere Sensoreinheiten (40) aufweist, um entsprechend Ströme zu erfassen, die in den mehreren Heizspulen (L) entsprechend der den mehreren Umrichtereinheiten (40) zugeführten Hochfrequenzleistung fließen, wobei das Steuerungsverfahren umfasst:
Erfassen einiger Heizspulen aus den mehreren Heizspulen (L), die von einigen Behältern besetzt sind;
**gekennzeichnet durch**
Ermitteln, ob eingegebene Leistungsstufen der erfassten Heizspulen, die von einem Benutzer eingegeben werden, gleich sind oder nicht;
gleiches Einstellen (254) von Tastverhältnissen von Pulsbreitenmodulationssignalen, die den Umrichtereinheiten (30) der jeweiligen Heizspulen zugeführt werden, bis mindestens einer der von den Sensoreinheiten (40) der erfassten Heizspulen erfassten Ausgangsströme in einem Soll-Bereich für Ausgangsströme, der der eingegebenen Leistungsstufe entspricht, liegt (255), wenn ermittelt wird, dass eingegebene Leistungsstufen der erfassten Heizspulen, die von einem Benutzer eingegeben werden, gleich sind; und
Zuführen eines Pulsbreitenmodulationssignals mit einem gleichen Tastverhältnis zu den erfassten Heizspulen und intermittierendes Zuführen des Pulsbreitenmodulationssignals zu mindestens einer der Heizspulen, wenn ermittelt wird, dass die eingegebenen Leistungsstufen unterschiedlich sind.

12. Steuerungsverfahren nach Anspruch 11, wobei der Induktionsherd ferner eine Benutzerschnittstelleneinheit (80) aufweist, um die Anzahl und die Positionsinformation für die Behälter, die auf den Heizspulen platziert sind, anzuzeigen und die Anzahl und Größen der Behälter einzugeben, wenn die angezeigte Anzahl der Behälter nicht mit der Anzahl der auf den Heizspulen platzierten Behältern übereinstimmt.

13. Steuerungsverfahren nach Anspruch 12, wobei die Tastverhältnisse der Pulsbreitenmodulationssignale geändert werden, bis der maximale Ausgangsstrom unter den Ausgangsströmen der Heizspulen in dem Soll-Bereich für Ausgangsströme liegt.

14. Steuerungsverfahren nach Anspruch 11, das ferner umfasst:
Ermitteln (261) der maximalen Leistungsstufe aus den eingegebenen Leistungsstufen, wenn ermittelt wird, dass die eingegebenen Leistungsstufen unterschiedlich sind;
Zuführen (262) eines Pulsbreitenmodulationssignals mit einem Tastverhältnis, das der maximalen Leistungsstufe entspricht, zu den jeweiligen Heizspulen; und
periodisch Einschalten/Ausschalten mindestens einer Heizspule mit Ausnahme der Heizspule, die die maximale Leistungsstufe hat, und Zuführen des Pulsbreitenmodulationssignals zu der mindestens einen Heizspule nur während einer EIN-Phase, um die mindestens eine Heizspule intermittierend zu betreiben.

15. Steuerungsverfahren nach Anspruch 14, wobei der intermittierende Betrieb der mindestens einen Heizspule umfasst: Einstellen eines Verhältnisses der EIN-Phase zu einer AUS-Phase der mindestens einen Heizspule anteilsmäßig zu einem Verhältnis der eingegebenen Leistungsstufe der entsprechenden Heizspule zu der maximalen Leistungsstufe, Ausschalten der Heizspulen, die die maximale Leistungsstufe haben, und anschließend Einschalten der Heizspulen, die die maximale Leistungsstufe haben, gleichzeitig mit dem Einschalten der mindestens einen intermittierend betriebenen Heizspule, wenn die mindestens eine intermittierend betriebene Heizspule von der AUS-Phase in die EIN-Phase umgeschaltet wird.

## Revendications

1. Procédé de commande d'un appareil de cuisson à chauffage par induction, qui comprend une plaque de cuisson (2), une pluralité de bobines de chauffage (L) pour chauffer des récipients (P) placés sur la plaque de cuisson, une pluralité d'unités d'onduleur (30) pour, respectivement, fournir une alimentation à haute fréquence à la pluralité de bobines de chauffage, et une pluralité d'unités de détection (40) pour respectivement détecter les courants circulant le long de la pluralité de bobines de chauffage (L) en fonction de l'alimentation à haute fréquence fournie par la pluralité d'onduleurs (30), le procédé de commande consistant:
à détecter (120, 140, 150) au moins une bobine de chauffage occupée par un premier récipient parmi la pluralité de bobines de chauffage (L);
à commuter (160) la pluralité d'onduleurs (30) de sorte qu'une entrée de niveau de puissance par un utilisateur est appliquée à ladite au moins une bobine de chauffage détectée (L);
**caractérisé par:**
**le fait que** l'on détermine (170), si ladite au moins une bobine de chauffage (L) occupée par le premier récipient (P) comprend plusieurs bobines de chauffage (L), si oui ou non des courants de sortie compris dans une plage de courant de sortie cible correspondant au niveau de puissance d'entrée sont présents parmi les courants de sortie des bobines de chauffage respectifs (L) détectées par les unités de détection (40); et
**le fait que** l'on règle à des valeurs égales (180) des rapports de régime des signaux de modulation de largeur d'impulsion appliqués aux onduleurs (30) des bobines de chauffage respectives (L) jusqu'à ce qu'au moins l'un des courants de sortie atteigne la plage de courant de sortie cible, en l'absence de courant de sortie dans la plage de courant de sortie cible.

2. Procédé de commande selon la revendication 1, dans lequel les rapports de régime des signaux de modulation de largeur d'impulsion sont modifiés (180) jusqu'à ce que le courant de sortie maximal parmi les courants de sortie des bobines de chauffage atteigne la plage de courant de sortie cible.

3. Procédé de commande selon la revendication 1, consistant en outre:
à détecter (210) au moins une bobine de chauffage occupée par un second récipient, si le second récipient est en outre placé sur la plaque de cuisson adjacente au premier récipient pendant la cuisson du premier récipient; et
à déterminer (240) si oui ou non les niveaux de puissance d'entrée du premier récipient et les seconds récipients sont égaux en confirmant le niveau de puissance de la seconde entrée de récipient par l'intermédiaire d'une unité d'interface utilisateur.

4. Procédé de commande selon la revendication 3, consistant en outre à appliquer (262) un signal de modulation de largeur d'impulsion ayant un rapport de régime égal aux bobines de chauffage respectives et, de manière intermittente (263), appliquer le signal de modulation de largeur d'impulsion à au moins l'une des bobines de chauffage, si l'on détermine que les niveaux de puissance d'entrée du premier récipient et du second récipient sont différents.

5. Procédé de commande selon la revendication 4, consistant en outre:
à déterminer (261) le niveau de puissance maximum parmi les niveaux de puissance d'entrée du premier récipient et du second récipient;
à appliquer (262) un signal de modulation de largeur d'impulsion ayant un rapport de régime correspondant au niveau de puissance maximal, aux bobines de chauffage respectives (L); et
à allumer et à éteindre (263) au moins une bobine de chauffage, à l'exception des bobines de chauffage présentant le niveau de puissance maximal, et appliquer le signal de modulation de largeur d'impulsion à ladite au moins une bobine de chauffage uniquement pendant une partie MARCHE pour faire fonctionner de façon intermittente ladite au moins une bobine de chauffage.

6. Procédé de commande selon la revendication 5, dans lequel le fonctionnement intermittent de ladite au moins une bobine de chauffage (L) comprend le réglage d'un rapport de la partie MARCHE à une partie ARRET de ladite au moins une bobine de chauffage proportionnellement à un rapport du niveau de puissance de la bobine de chauffage correspondante au niveau de puissance maximal.

7. Procédé de commande selon la revendication 6, dans lequel le fonctionnement intermittent de ladite au moins une bobine de chauffage (L) comprend l'arrêt des bobines de chauffage ayant le niveau de puissance maximal puis l'allumage des bobines de chauffage avec le niveau de puissance maximal en même temps que l'allumage de ladite au moins une bobine de chauffage à fonctionnement intermittent lorsque ladite au moins une bobine de chauffage à fonctionnement intermittent est actionné pour passer de la partie ARRET à la partie MARCHE.

8. Procédé de commande selon la revendication 3, dans lequel la détection de ladite au moins une bobine de chauffage occupée par le premier récipient inclut:
la commande de la pluralité d'onduleurs (30) de sorte que l'alimentation à haute fréquence est fournie alternativement à la pluralité de bobines de chauffage (L); et
la détermination que la bobine de chauffage correspondante est occupée par le premier récipient, si une valeur de courant détectée par l'unité de détection correspondante (40) est supérieure à une valeur de courant prédéterminée à la suite du fonctionnement de la pluralité d'onduleurs (30).

9. Procédé de commande selon la revendication 8, dans lequel la détection de ladite au moins une bobine de chauffage occupée par le second récipient inclut:
la commande du fonctionnement de la pluralité d'onduleurs (30) de sorte que l'alimentation à haute fréquence est fournie alternativement aux bobines de chauffage restantes, à l'exception de ladite au moins une bobine de chauffage occupée par le premier récipient pendant la cuisson du premier récipient; et
la détermination que la bobine de chauffage correspondante est occupée par le second récipient, si une valeur de courant détectée par l'unité de détection correspondante (40) est supérieure à la valeur de courant prédéterminée à la suite de la fourniture d'une alimentation à haute fréquence aux bobines de chauffage restantes.

10. Procédé de commande selon la revendication 9, consistant en outre, si le courant de sortie d'au moins l'une de ladite au moins une bobine de chauffage occupée par le premier récipient augmente une fois le second récipient placé sur la plaque de cuisson, à déterminer si la bobine de chauffage dont le courant de sortie a progressé, doit être occupée en commun par le premier récipient et le deuxième récipient.

11. Procédé de commande d'un appareil de cuisson à chauffage par induction, qui comprend une plaque de cuisson (2), une pluralité de bobines de chauffage (L) pour chauffer des récipients (P) placés sur la plaque de cuisson, une pluralité d'onduleurs (30) pour, respectivement, fournir une alimentation à haute fréquence à la pluralité de bobines de chauffage (L), et une pluralité d'unités de détection (40) pour respectivement détecter les courants circulant le long de la pluralité de bobines de chauffage (L) en fonction de l'alimentation à haute fréquence fournie par la pluralité d'unités d'onduleur (30), le procédé de commande consistant:
à détecter une pluralité de bobines de chauffage occupées par plusieurs récipients parmi la pluralité de bobines de chauffage (L);
**caractérisé par :**
**le fait que** l'on détermine si oui ou non les niveaux de puissance d'entrée des bobines de chauffage détectées par un utilisateur sont égaux;
**le fait que** l'on règle à des valeurs égales (254) les rapports de régime des signaux de modulation de largeur d'impulsion appliqués aux onduleurs (30) des bobines de chauffage respectives jusqu'à ce que au moins l'un des courants de sortie détectés par les unités de détection (40) des bobines de chauffage détectées atteigne (255) une plage de courant de sortie cible correspondant au niveau de puissance d'entrée, en confirmant que les niveaux de puissance d'entrée des bobines de chauffage détectées entrées par un utilisateur sont égaux; et
**le fait que** l'on applique un signal de modulation de largeur d'impulsion de rapport de régime égal, à au moins l'une des bobines de chauffage et que l'on applique de manière intermittente le signal de modulation de largeur d'impulsion à au moins une des bobines de chauffage, si l'on détermine que les niveaux de puissance d'entrée sont différents.

12. Procédé de commande selon la revendication 11, dans lequel l'appareil de cuisson à chauffage par induction inclut en outre une unité d'interface utilisateur (80) pour afficher les informations concernant le nombre et la position des récipients placés sur les bobines de chauffage et pour entrer le nombre et la taille des récipients si le nombre affiché des récipients ne coïncide pas avec le nombre de récipients placés sur les bobines de chauffage.

13. Procédé de commande selon la revendication 12, dans lequel les rapports de régime des signaux de modulation de largeur d'impulsion sont modifiés jusqu'à ce que le courant de sortie maximal parmi les courants de sortie des bobines de chauffage atteigne la plage de courant de sortie cible.

14. Procédé de commande selon la revendication 11, consistant en outre:
à déterminer (261) le niveau de puissance maximal parmi les niveaux de puissance d'entrée, en déterminant que les niveaux de puissance d'entrée sont différents;
à appliquer (262) un signal de modulation de largeur d'impulsion ayant un rapport de régime correspondant au niveau de puissance maximal, aux bobines de chauffage respectives; et
à allumer et éteindre au moins une bobine de chauffage, à l'exception des bobines de chauffage présentant le niveau de puissance maximal, et à appliquer le signal de modulation de largeur d'impulsion à ladite au moins une bobine de chauffage uniquement pendant une partie MARCHE pour faire fonctionner de façon intermittente ladite au moins une bobine de chauffage.

15. Procédé de commande selon la revendication 14, dans lequel le fonctionnement intermittent de ladite au moins une bobine de chauffage comprend le réglage d'un rapport de la partie MARCHE à une partie ARRET de ladite au moins une bobine de chauffage proportionnellement à un rapport du niveau de puissance d'entrée de la bobine de chauffage correspondante au niveau de puissance maximale, en éteignant les bobines de chauffage présentant le niveau de puissance maximal puis en allumant les bobines de chauffage présentant le niveau de puissance maximum simultanément avec l'allumage de ladite au moins une bobine de chauffage à fonctionnement intermittent lorsque ladite au moins une bobine de chauffage à fonctionnement intermittent passe de la partie ARRET à la partie MARCHE.
